Europäisches Patentamt

European Patent Office

Office européen des brevets

(11) Publication number : **0 515 129 A2**

# (12) EUROPEAN PATENT APPLICATION

(21) Application number : **92304490.3**

(22) Date of filing : **18.05.92**

(51) Int. Cl.⁵ : **G01N 21/01, G01N 21/76**

(30) Priority : **20.05.91 IL 98193**

(43) Date of publication of application :
**25.11.92 Bulletin 92/48**

(84) Designated Contracting States :
**AT BE CH DE DK ES FR GB GR IT LI LU MC NL PT SE**

(71) Applicant : **ISRAEL AIRCRAFT INDUSTRIES, LTD.**
**Ben Gurion International Airport**
**Lod 70 100 (IL)**

(72) Inventor : **Reshef, Moshe**
**54 Oley Hagardom**
**Rishon Lezion (IL)**
Inventor : **Sohn, Zeev**
**-**
**Neve Tzuf (IL)**
Inventor : **Laviv, Luician**
**261 Ben Gurion Street**
**Ramat Gan (IL)**
Inventor : **Asher, Gideon**
**21 Montifiory Street**
**Kiryat Ono (IL)**

(74) Representative : **Hillier, Peter et al**
**Reginald W. Barker & Co., 13, Charterhouse Square**
**London, EC1M 6BA (GB)**

(54) **Apparatus for optical testing of samples.**

(57) An apparatus for optical testing of samples is disclosed. The apparatus includes a) apparatus (28) for receiving a plurality of samples to be tested, b) light detection apparatus (20), c) apparatus (32, 42 and 48) defining light paths-extending from the plurality of samples to the light detection apparatus and d) apparatus (40 and 56) for exposing the light detection apparatus to light received from individual ones of the plurality of samples along the light paths.

FIG.1

EP 0 515 129 A2

## FIELD OF THE INVENTION

The present invention relates in general to photometric apparatus and more particularly to apparatus for optical testing of samples.

## BACKGROUND OF THE INVENTION

The optical testing of samples is useful in a number of chemical and biological test procedures. One such procedure is a method for detecting toxic substances in liquids described in published U.K. Patent Application 2 005 018 A. In this method the luminosity of a suspension of luminous microorganisms which has been exposed to a toxic substance is compared to a reference standard which is the luminosity of a suspension of microorganisms not exposed to a toxic substance.

Apparatus for detection and quantification of light such as photometers with a plurality of photodetective devices are well known in the art. Exemplary apparatus for measuring light emitted or transmitted from a sample that can be employed to implement the test described in U.K. 2 005 018A is described in U.S. Patent 4,213,703. This apparatus, however, comprises only a single sample cell, a photodetector and a light path between the sample cell and the photodetector. Consequently, in using this apparatus for the test described in U.K. 2 005 018A the sample must be removed from the apparatus before measuring the reference standard. Moreover, if more than one sample is to be tested, each sample and the reference for that sample must be placed separately in the apparatus. This handling of the samples is labor intensive and, if a sample is to be measured more than once, also requires an undesirable disturbance to the sample.

## SUMMARY OF THE INVENTION

The object of the present invention is to provide compact simple apparatus for detection and quantification of light from a plurality test samples.

There is thus provided in accordance with the present invention apparatus for optical testing of samples comprising, apparatus for receiving a plurality of samples to be tested, light detection apparatus, apparatus defining light paths extending from the plurality of samples to the light detection apparatus, and apparatus for exposing the light detection apparatus to light received from individual ones of the plurality of samples along the light paths.

In accordance with a preferred embodiment of the present invention the light detection apparatus includes a photomultiplier tube.

In accordance with another preferred embodiment of the invention the apparatus for defining light paths includes a sample holder comprising, a plurality of sample chambers, a location for receiving the apparatus for exposing the light detection apparatus, and a plurality of light paths from the sample chambers to the location for receiving the apparatus for exposing the light detection apparatus.

In accordance with another preferred embodiment of the invention the location for receiving the apparatus for exposing the light detection apparatus comprises a central cavity.

In accordance with yet another preferred embodiment of the invention the apparatus for exposing the light detection apparatus includes a light path selection apparatus alignable with each of the plurality of cylindrical holes for selectively directing light from each of the plurality of sample chambers to the photomultiplier tube.

In accordance with still another preferred embodiment of the invention the plurality of light paths are embodied in a plurality of cylindrical holes connecting the sample chambers to the central cavity.

In accordance with a further preferred embodiment of the invention the light receiving apparatus receives light emitted by the samples.

In accordance with a yet a further preferred embodiment of the invention the light receiving apparatus receives light transmitted through the samples.

In accordance with still a further preferred embodiment of the invention the sample holder additionally comprises heat exchange apparatus for controlling the temperature in the plurality of sample chambers.

In accordance with another preferred embodiment of the invention the heat exchange apparatus comprises, a plurality of heat pumps each having a first and second side and wherein each first side is in thermal contact with the sample holder, apparatus for determining the temperature of the sample chambers, and wherein each second side is in thermal contact with a heat sink.

According to yet another preferred embodiment of the invention the sample holder is formed from a material having a coefficient of thermal conductivity sufficient to allow the transfer of thermal energy between the sample cells and the heat sink.

According to still another preferred embodiment of the invention each of the heat pumps comprises, a thermoelectric unit being operable according to the Peltier effect, and apparatus for passing a polarized current through the thermoelectric units to transfer heat between the heat sink and the stationary body in the direction determined by the polarity of the current.

According to a further preferred embodiment of the invention the light path selection apparatus comprises, apparatus for bending light from each of the.plurality of sample chambers to direct the light along a path to the photomultiplier tube, apparatus for selectively placing the apparatus for bending light in a plurality of positions corresponding to each of the plurality of sample chambers wherein at each position the apparatus for bending light is in alignment with one of the plurality of cylindrical holes connecting the sample chambers to the central cavity.

In accordance with still a further preferred embodiment of the invention the apparatus for bending light includes a prism.

In accordance with yet a further preferred embodiment of the invention the apparatus for selectively placing the apparatus for bending light comprises, a rotating stepper motor, a rotatable base whereon the apparatus for rotating light is mounted, and a rotatable shaft connected at a first end to the stepper motor and at a second end to the base, for rotating the base through a predetermined arc each time the stepper motor is activated.

In accordance with another preferred embodiment of the invention the sample holder body is fixedly mounted in a plane orthogonal to a light path from light path selection apparatus to the photosensitive device.

In accordance with still another preferred embodiment of the invention the sample holder is thermally insulated except where it is in thermal contact with the heat pumps.

In accordance with yet another preferred embodiment of the invention the apparatus additionally comprises controlling apparatus including, apparatus for controlling the position of the light path selection apparatus and the period of time the light path selection apparatus remains in each position, apparatus for preventing data acquisition when the temperature of the sample chambers deviates from a predetermined temperature range, apparatus for controlling a calibration procedure, and apparatus for disconnecting the photomultiplier tube power supply when the photomultiplier tube is exposed to extraneous light.

In accordance with a further preferred embodiment of the invention the controlling apparatus is embodied in microprocessor.

In accordance with an embodiment of the present invention, the light path selection apparatus includes apparatus for selectively placing the light detection apparatus in a plurality of positions corresponding to each of the plurality of sample chambers wherein at each position the light detection apparatus is in alignment with one of the plurality of cylindrical holes connecting the sample chambers to the central cavity.

In accordance with yet a further preferred embodiment of the invention the apparatus additionally includes a light source for projecting light into a sample in each of the sample chambers.

There is also provided in accordance with the present invention apparatus for quantification of light from test samples comprising, apparatus for detecting light including a photosensitive device for providing an electrical signal proportional to the quantity of light impinging thereon, data analysis apparatus including, apparatus for converting the electrical signals to a value representing the quantity of light, apparatus for storing the value for at least one of the test samples for each of a multiplicity of observations taken at predetermined time points over a predetermined period of time providing a multiplicity of values, and apparatus for transforming the multiplicity of values of a specific test sample to values proportional to the maximum value of the multiplicity of values.

There is further provided in accordance with the present invention apparatus for comparing the quantitative value of light from at least one first test sample with the quantitative value of light from at least one second test sample comprising, apparatus for detecting light including a photosensitive device for providing an electrical signal proportional to the quantity of light impinging thereon, data analysis apparatus including, apparatus for converting the electrical signal to a value representing the quantity of light, apparatus for storing the value for each of a multiplicity of observations of at least one of the first and second test samples taken at predetermined time points over a predetermined period of time to provide a multiplicity of values for the first and second test samples, apparatus for calculating interpolated values for light quantity for at least one of the first and second test samples for all relevant time points at which observations were not performed to be incorporated in the multiplicity of values for the first and second test samples, apparatus for subtracting each of the multiplicity of values of at least one of the first test samples from each of the multiplicity of values of at least one of the second test samples at all relevant time points to provide a multiplicity of difference values apparatus for transforming the multiplicity of difference values to values proportional to the maximum value of the difference values.

In accordance with a preferred embodiment of the invention the photosensitive device includes a photomultiplier tube.

In accordance with another preferred embodiment of the invention the data analysis apparatus is embodied in a microprocessor.

In accordance with still another preferred embodiment of the invention the display apparatus includes a printer-plotter.

There is additionally provided in accordance with the present invention a photometric device comprising, a housing, apparatus for detecting light including a photosensitive device for producing electrical signals proportional to the quantity of the light impinging thereon, a sample holder including, a central cavity mounted within the housing, an exterior portion including, a plurality of sample chambers sealable to exclude external light sources for receiving and retaining at least one light-transmitting sample container, a plurality of cylindrical holes connecting the sample chambers to the central cavity, and temperature control for controlling the temperature of the sample chambers, light path selection apparatus alignable with each of the plurality of cylindrical holes for selectively directing light from each of the plurality of sample chambers to the photosensitive device, data acquisition and analysis apparatus for converting the electrical signals to values representing the quantity of light and analyzing the values; and control apparatus for controlling the operation of the light path selection apparatus and the temperature control apparatus.

## BRIEF DESCRIPTION OF THE DRAWINGS

The present invention will be understood and appreciated more fully from the following detailed description, taken in conjunction with the drawings in which:

Fig. 1 is a pictorial view illustration of a photometer constructed and operative in accordance with a preferred embodiment of the invention;

Fig. 2 is an exploded pictorial view illustration of a portion of the apparatus of Fig. 1;

Fig. 3 is an exploded pictorial view illustration of a portion of the apparatus of Fig. 2;

Fig. 4 is a side sectional view illustration of the apparatus of Fig.2;

Fig. 5 is a top sectional view illustration of a portion of the apparatus of Fig. 4 taken along the lines IV - IV;

Fig. 6 is a block flow diagram illustration of the steps in the operation of the apparatus of Fig. 1;

Fig. 7 is an exploded pictorial view of a portion of an alternative apparatus of Fig. 1; and

Fig. 8 is a pictorial illustration of a side-on photomultiplier utilized in the embodiment of Fig. 7.

## DETAILED DESCRIPTION OF PREFERRED EMBODIMENTS

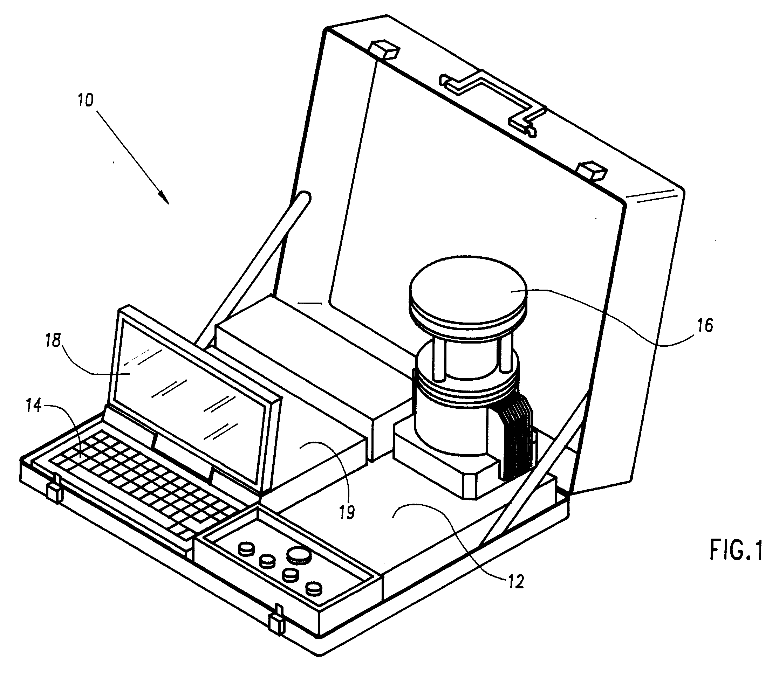

Reference is now made to Fig. 1 which illustrates an apparatus for optical testing of samples 10 operative in accordance with a preferred embodiment of the invention and comprising an instrument housing 12, a keyboard 14, a photometer apparatus 16 and a display monitor 18. The keyboard 14 is used to input instructions to a microprocessor 19, typically a microcomputer such as any IBM XT compatible laptop. The microprocessor 19 controls the operation of the photometer apparatus 16 and analyzes the data collected for display on the monitor 18 or a printer plotter, not shown.

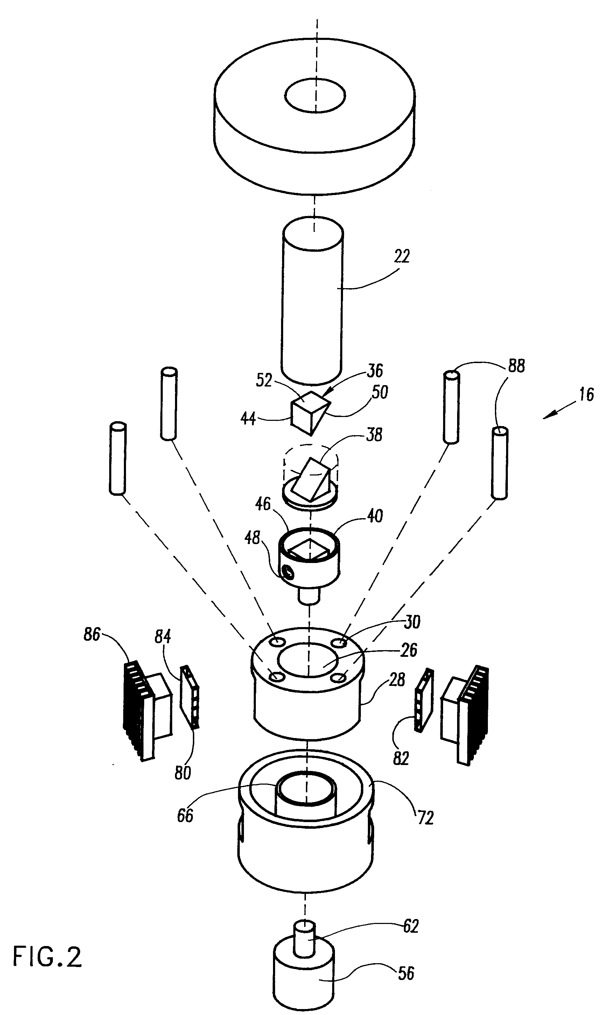

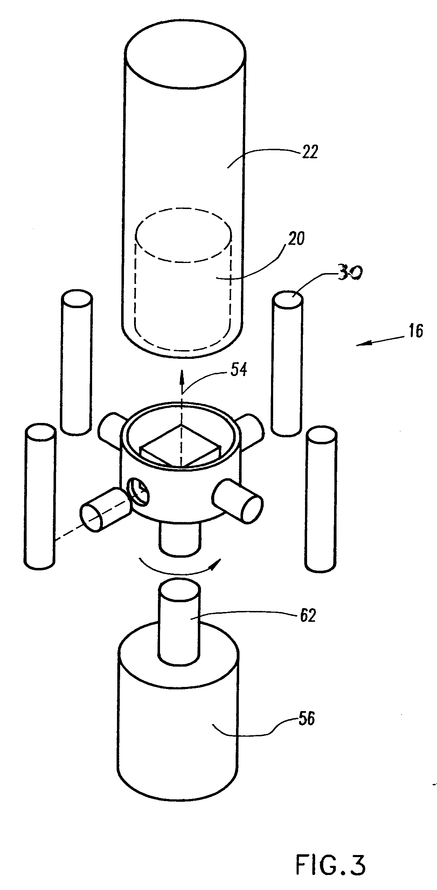

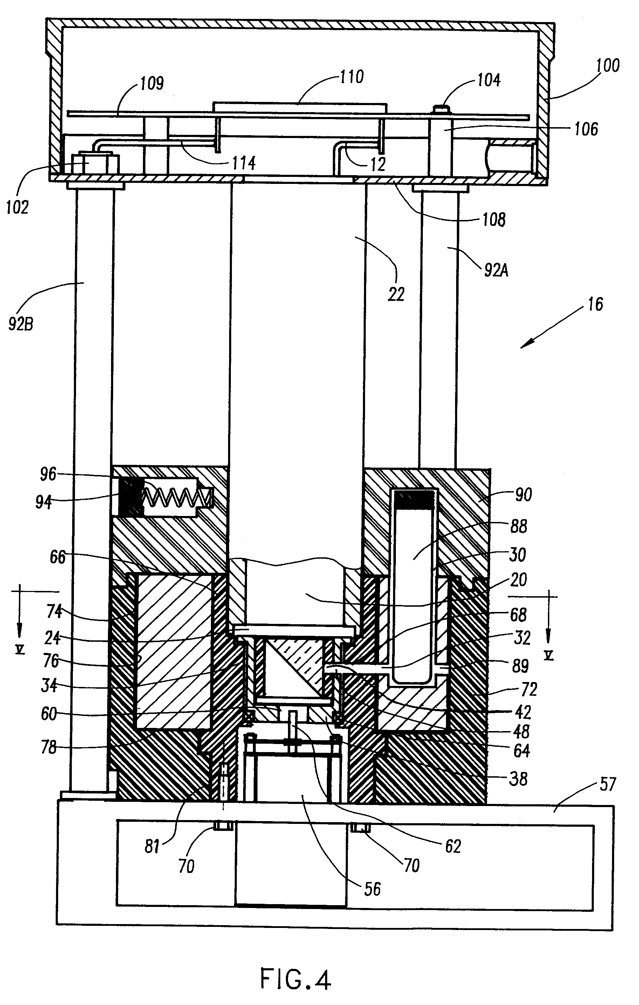

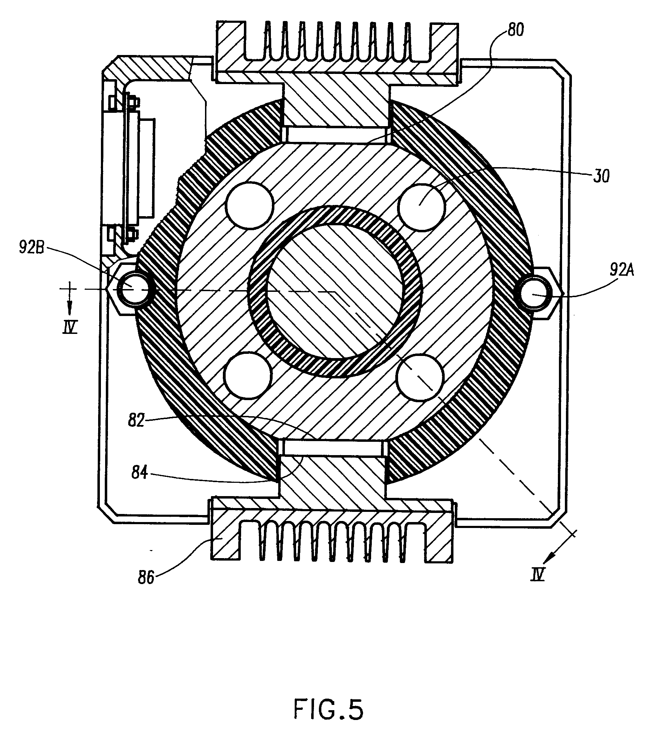

Reference is now made to Figs. 2 - 5 which illustrate the photometer apparatus 16. The photometer apparatus 16 includes a photometric device 20, typically a head-on photomultiplier such as the H3460-04 photon counting head, commercially available from Hamamatsu Photonics K.K., Shizuoka-Ken, Japan. The photometric device 20 is housed in a tubular housing 22 and mounted by any convenient means several centimeters above an aperture window 24 at one end of tubular housing 22. The window end of tubular housing 22 is received in a central cavity 26 of a doughnut shaped sample holder 28.

The sample holder 28 which is fabricated from a thermally conductive material such as aluminum also includes an exterior portion having four sample chambers 30 each of which is optically connected to the central cavity 26 by cylindrical holes 32. Below the aperture window 24 and separated from it by about 2 mm is a light path selection device 34 for selectively directing light emitted by a sample in the sample chambers 30 from the end of the cylindrical holes 32 in the central cavity 26 through the aperture window 24 to the photomultiplier 20.

The light path selection device 34 includes a right angle prism 36 for bending the light passing through the cylindrical holes 32 at a 90 degree angle and directing it to the photosensitive device 20. The prism 36 is rigidly held a rubber mounting 38 that is in turn held in an aluminum cup 40. A cylindrical hole 42 in the rubber mounting 38, of approximately the same diameter as cylindrical holes 36, extends laterally from the face 44 of prism 36 to the wall 46 of aluminum cup 40. The cylindrical hole 42 continues as a circular aperture 48 in the wall 46 of aluminum cup 40.

Aperture 48 and cylindrical hole 42 can be aligned with cylindrical hole 32 to permit light from samples in the sample chambers 30 to reach face 44 of prism 36 where it is then transmitted to face 50 of prism 36 and reflected 90 degrees to pass out of prism 36 at face 52 and continue along light path 54 to photomultiplier 20.

Below the aluminum cup 40 is a rotary driven stepper motor 56 such as the 12 position 179793-001 commercially available from Lucas Ledes Inc., Ohio, USA. Stepper motor 56 which is mounted to a base portion 57 of instrument housing 12 by any convenient means. Base 58 of aluminum cup 40 is fitted with a grove 90 into which into a shaft 62 of stepper motor 56 is fitted such that when the stepper motor 56 is activated the shaft 62 turns, rotating the aluminum cup to allow detection of light from each of the sample chambers 30 in turn.

The outer rim of base 58 of aluminum cup 40 is pressed into a ring of ball bearings 64 which runs in a raceway formed in a rigid inner insulating member 66. The inner insulating member 66 which is typically fabricated from a material such as DELRON is disposed in the central cavity 26 between the sample holder 28 and stepper motor 56, the light path selection device 34 and tubular housing 22. Inner insulating member 66 abuts sample holder 28 but is separated from stepper motor 56, light path selection device 34 and tubular housing 22 by a distance of several millimeters. The inner insulating member 66 includes four cylindrical holes 68 of the same diameter as cylindrical holes 32 in the sample holder. Cylindrical holes 68 are aligned with cylindrical holes 32 to allow light from sample chambers 30 to reach the light path selection device 34.

The inner insulating member 66 is mounted to the instrument base portion 57 of instrument housing 12 by screws 70 and supports a peripheral portion of tubular housing 22 adjacent to the window aperture such that the longitudinal axis of the tubular housing 22 is maintained in orthogonal relationship to the longitudinal axis of cylindrical holes 32, 68 and 42 and circular aperture 48.

Outer insulating member 72 cooperates with inner insulating member 66 to insulate the sample holder 28. The inner surface 74 of outer insulating member 72 abuts the outer surface 76 and base surface 78 of sample holder 28 and the outer surface 81 of inner insulating member 66. The outer insulating member 72 is also mounted to the instrument base portion 57 of the instrument housing 12 by any convenient means such as screws.

The temperature of the sample chambers 30 is controlled by heat pumps 80 which are typically thermoelectric units operable according to the Peltier effect such as the Thermoelectric Module, CP 4-71-06L, commercially available from MELCOR, N.J., USA. The heat pumps 80 have a first side 82 in thermal contact with the sample holder 28 and a second side 84 in contact with a heat sink 86 for transferring heat between the sample holder 28 and the heat sink 86. The activation of the heat pumps 80 is controlled by the microprocessor when the temperature of the sample chambers 30 deviates from a predetermined range. The temperature of the sample chambers is monitored by a temperature sensor, not shown, such as thermistor YSI 44032 commercially available from Precision Thermistors, Ohio, USA, which is in thermal contact with one of the sample chambers.

Cuvettes 88 in which samples to be analyzed can be placed, are removably disposed in the sample chambers 30. Cylindrical holes 32 are positioned near the base of the sample chambers 30 and extend from the cuvettes 88 to inner insulating member 66 to form the first part of a light path to the photometric device 20 for light emitted or transmitted from the samples. Cylindrical holes 89 extend from cuvettes 88 to outer insulation member 72 and are in optical alignment with cylindrical holes 32 for the positioning of a light source, not shown, for use in measurement of transmitted light. The sample chambers 30 can be sealed to prevent extraneous light from entering them by securing cover 90 to the top portion of sample holder 28, inner insulating member 66 and outer insulating member 72.

Cover 90 slides vertically on posts 92A and 92B and can be secured in any position along posts 92A and 92B by friction between stop 94 and post 92B. Stop 94 is a piston which slides in bore 96 and is urged against one of posts 92B by compression spring 96. When stop 94 is manually forced away from post 92B, cover 90 easily slides up and down.

Posts 92A and 92B are mounted at a first end by any convenient means to the base portion 57 of instrument housing 12. At their second end posts 92A and 92B are secured to a top member 100 and held in place by nut 102 which engages threads on post 92B and bolt 104 which engages threads within an extension 106 of post 92A.

The base plate 108 of top member 100 abuts the end of tubular housing 22 opposite window aperture 24 and maintains tubular housing 22 in correct vertical alignment through the compressive force exerted on tubular housing 22 by tightening screw 104 and nut 102.

Top member 100 encloses circuit board 109 on which is mounted data acquisition electronic components 110. Data acquisition electronic components receive input from the photosensitive device 20 through connection 112 and transmit output through connection 114 to the microprocessor 19, not shown.

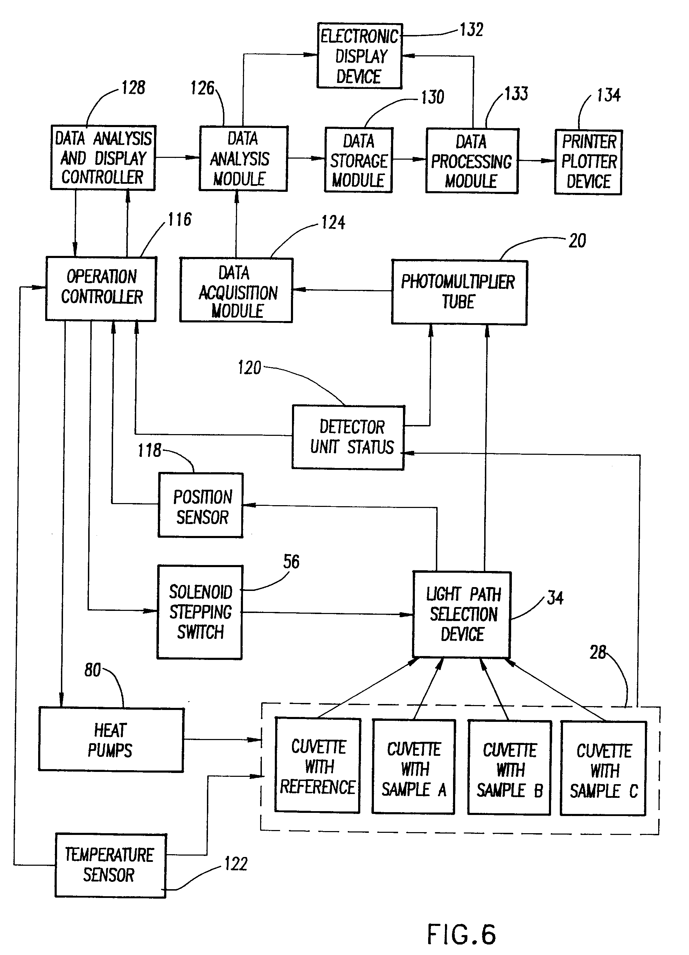

Reference is now made to Fig. 6 which illustrates the operation of the apparatus for the optical testing of samples 10. Samples to be tested are placed in cuvettes 88. Typically samples to be tested are tested for toxicity and are placed in cuvettes 88 with an indicator reagent solution containing fluorescent microorganisms such as the Microtox reagent commercially available from Microbics Corp., CA, USA.

Typically, three sample cuvettes 88 and a reference cuvette 88 containing only a solution of the fluorescent microorganisms are placed in the sample chambers 30 of the sample holder 28 and the cover 90 closed. Testing is initiated by activating the operation controller 116 which in turn operates the stepper motor 56 which aligns the cylindrical hole 42 and aperture 48 of the light path selection device 34 with cylindrical hole 32 of the sample chamber 30 containing the first test sample.

The operation controller 116 receives input from a position sensor 118 that reports the position of the light path selection device. If the position is incorrect the operation controller activates the stepper motor 56 to bring the light path selection device 34 into the correct position.

The operation controller 116 additionally receives input from the detection unit status monitor 120. If the cuvettes 88 are not covered the detection unit status monitor shuts power to the photomultiplier tube 20 and signals the operation controller 116.

The operation controller 116 also receives input from the temperature sensor 122 which monitors the temperature of the sample chambers 30 of the sample holder 28. The operation controller 116 activates the heat pumps 80 when the temperature reported by the temperature sensor 122 falls outside a predetermined range.

Data acquisition is initiated by the operation controller 116 by activating the photomultiplier tube 20 and the data acquisition module 124 if system operation is normal. This is indicated by the input from the temperature sensor 122, the detection unit status monitor 120 and the position sensor 118 being in the range of normal operating conditions. When operating conditions are not in the normal range the operation controller 116 blocks data acquisition.

When data acquisition is initiated the photomultiplier tube 20 produces a signal for each photon which passes through aperture window 24. These signals are counted by data acquisition module 124 which inputs this information to data analysis module 126. Under control of data analysis and display controller 128 the data analysis module 126 divides the total count by the time spent counting to create a value for the average counts per second for the time spent counting. This result is inputted as a data point to the data storage module 130 and to an electronic display device 132 or a printer plotter 134.

When a predetermined period of time has elapsed the operation controller shuts off the photomultiplier tube 20 and activates the stepper motor 56 to align the light path selection device 34 with the cuvette 88 containing the second sample and reinitiates data acquisition if system operation is normal.

Data acquisition cycles are continued until all sample cuvettes 88, the reference cuvette 88, and a dark reference are tested for a predetermined period of time and for a predetermined number of observations. The dark reference is a measurement taken when the light path selection device 34 is between sample chambers 30, and thus is not exposed to light.

When data acquisition is complete the data storage module 130 inputs the data points to the data processing module 133 which performs the following steps: a) reads the data points for all cuvettes 88 b) interpolates values for the reference cuvette for the times when data points for other cuvettes 88 were taken c) subtracts interpolated reference values from data points from other cuvettes 88 and d) normalizes the results of the subtraction for each cuvette with respect to the maximum value for that cuvette. The data processing module then inputs the electronic display device 132 and/or a printer plotter 134.

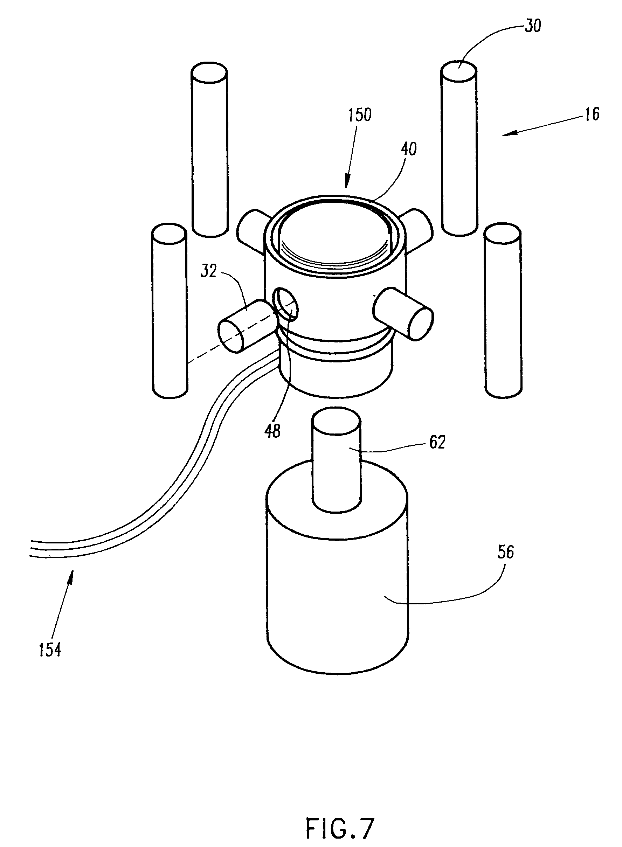

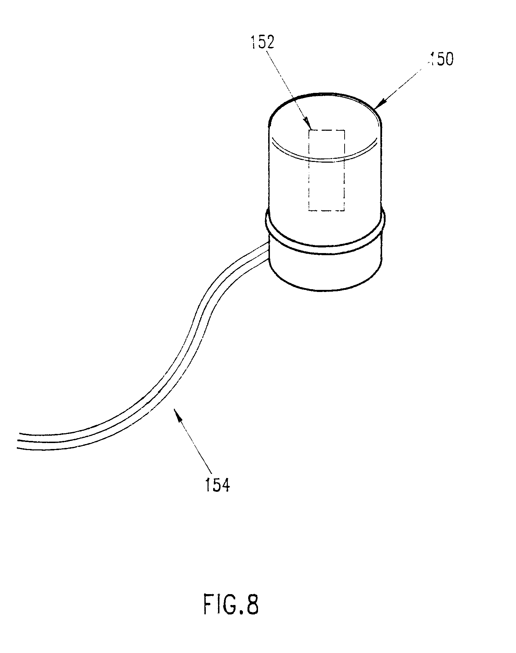

Reference is now made to Figs. 7 and 8 which illustrate an alternative apparatus of the present invention. In Figs. 7 and 8, similar elements are given similar reference numerals.

In this alternative embodiment, the photometer apparatus 16 comprises a side-on photomultiplier 150 placed into the aluminum cup 40. The side-on photomultiplier 150 is connected to the shaft 62 of the stepper motor 56 and is rotated thereby.

As shown in Fig. 8, the side-on photomultiplier 150 comprises a window 152 through which light from the samples in the cuvettes 88, placed into the sample chambers 30, is received.

The stepper motor 56 rotates the side-on photomultiplier 150 such that the window 152 is aligned with aperture 48 of the aluminum cup 40, which, in turn, is aligned with the cylindrical hole 32 connected to the sample chamber 30 whose sample is to be tested.

It is noted that the stepper motor 56 rotates the side-on photomultiplier 150 through no more than 360 degrees in order to ensure that wires 154 of the photomultiplier 150 remain untangled.

It is further noted that in this alternative embodiment, the prism 36 and its mounting 38 are not utilized.

It will be appreciated by persons skilled in the art that the present invention is not limited to what has been particularly shown and described hereinabove. Rather the scope of the present invention is defined only by the claims which follow:

## Claims

1. Apparatus for optical testing of samples comprising:

    means for receiving a plurality of samples to be tested;

    light detection means;

    means defining light paths extending from the plurality of samples to the light detection means; and

    means for exposing the light detection means to light received from individual ones of the plurality of samples along the light paths.

2. Apparatus according to claim 1 wherein the light detection means includes a photomultiplier tube.

3. Apparatus according to claim 1 wherein the means for defining light paths includes a sample holder comprising:

    a plurality of sample chambers;

    a location for receiving the means for exposing the light detection means; and

    a plurality of light paths from the sample chambers to the location for receiving.

4. Apparatus according to claim 1 wherein the means for exposing the light detection means includes a light path selection means alignable with each of the plurality of cylindrical holes for selectively directing light from each of the plurality of sample chambers to the photomultiplier tube.

5. Apparatus according to claim 3 wherein the plurality of light paths are embodied in a plurality of cylindrical holes connecting the sample chambers to the central cavity.

6. Apparatus according to claim 3 wherein the sample holder additionally comprises heat exchange means for controlling the temperature in the plurality of sample chambers.

7. Apparatus according to claim 4 wherein the light path selection means comprises:

means for bending light from each of the plurality of sample chambers to direct the light along a path to the photomultiplier tube;

means for selectively placing the means for bending light in a plurality of positions corresponding to each of the plurality of sample chambers wherein at each position the means for bending light is in alignment with one of the plurality of cylindrical holes connecting the sample chambers to the central cavity.

8. Apparatus according to claim 4 wherein the light path selection means comprises:

means for selectively placing the light detection means in a plurality of positions corresponding to each of the plurality of sample chambers wherein at each position the light detection means is in alignment with one of the plurality of cylindrical holes connecting the sample chambers to the central cavity.

9. Apparatus for quantification of light from test samples comprising:

means for detecting light including a photosensitive device for providing an electrical signal proportional to the quantity of light impinging thereon;

data analysis means including:

means for converting the electrical signals to a value representing the quantity of light;

means for storing the value for at least one of the test samples for each of a multiplicity of observations taken at predetermined time points over a predetermined period of time providing a multiplicity of values; and

means for transforming the multiplicity of values of a specific test sample to values proportional to the maximum value of the multiplicity of values.

10. Apparatus for comparing the quantitative value of light from at least one first test sample with the quantitative value of light from at least one second test sample comprising:

means for detecting light including a photosensitive device for providing an electrical signal proportional to the quantity of light impinging thereon;

data analysis means including:

means for converting the electrical signal to a value representing the quantity of light;

means for storing the value for each of a multiplicity of observations of at least one of the first and second test samples taken at predetermined time points over a predetermined period of time to provide a multiplicity of values for the first and second test samples;

means for calculating interpolated values for light quantity for at least one of the first and second test samples for all relevant time points at which observations were not performed to be incorporated in the multiplicity of values for the first and second test samples; and

means for subtracting each of the multiplicity of values of at least one of the first test samples from each of the multiplicity of values of at least one of the second test samples at all relevant time points to provide a multiplicity of difference values; and

means for transforming the multiplicity of difference values to values proportional to the maximum value of the difference values.

11. A photometric device comprising:

a housing;

means for detecting light including a photosensitive device for producing electrical signals proportional to the quantity of the light impinging thereon;

a sample holder including:

a central cavity mounted within the housing;

an exterior portion including:

a plurality of sample chambers sealable to exclude external light sources for receiving and retaining at least one light-transmitting sample container; and

a plurality of cylindrical holes connecting the sample chambers to the central cavity;

temperature control means for controlling the temperature of the sample chambers;

light path selection means alignable with each of the plurality of cylindrical holes for selectively directing light from each of the plurality of sample chambers to the photosensitive device;

data acquisition and analysis means for converting the electrical signals to values representing the quantity of light and analyzing the values; and

control means for controlling the operation of the light path selection means and the temperature control means.

FIG.1

FIG.2

FIG.3

FIG.4

FIG.5

FIG.6

FIG.7

FIG.8